# EUROPEAN PATENT SPECIFICATION

(11) **EP 2 368 060 B1**
(45) Date of publication and mention of the grant of the patent: **01.08.2012**
(21) Application number: 09752493.8
(22) Date of filing: 13.11.2009
(51) Int. Cl.: F16H 61/662

(54) **CONTINUOUSLY VARIABLE TRANSMISSION**
STUFENLOSES GETRIEBE
TRANSMISSION À VARIATION CONTINUE

(30) Priority: 22.12.2008 NL 2002364
(43) Date of publication of application: 28.09.2011
(73) Proprietor: Robert Bosch GmbH, 70839 Gerlingen (DE)
(72) Inventor: FARAON, Irinel, Cosmin, NL-5056 JL Berkel-Enschot (NL); BRANDSMA, Arjen, NL-5045 WN Tilburg (NL)
(74) Representative: Ketelaars, Maarten F.J.M.
(86) International application number: PCT/NL2009/050684
(87) International publication number: WO 2010/074563

(56) References cited:
- EP-A- 0 291 129
- EP-A- 1 441 151
- DE-A1- 10 018 243
- US-A- 4 596 536
- US-A- 4 820 242
- US-A- 5 328 412
- US-A1- 2002 077 211
- US-A1- 2002 142 870

## Description

The present invention relates to a continuously variable transmission comprising a primary pulley fitted on a drive-shaft and a secondary pulley fitted on a shaft to be driven, each of the pulleys comprising two conical pulley sheaves having angled sheave surfaces defining a circumference groove in which an endless transmission belt is (to be) held at a variable radial position.

The design and operation of a transmission of this type are deemed to be known, for example from EP 1 218 654 B1, which also shows one of the known types of endless transmission belts. This endless transmission belt is generally known as the Van Doome pushbelt and is described in more detail, for example, in patent publication EP 1 221 563 A1.

A further example of such continuously variable transmission is disclosed in US 4 596 536. In this known transmission, which is especially intended for use in cars, the desired transmission ratio is adjustable by simultaneously changing the width of the V-shaped grooves of the primary pulley and the secondary pulley such that the V-shaped groove of the one pulley becomes wider and that of the other pulley becomes narrower. As a result of this the radial position of the endless transmission belt is changed in both pulleys and with it the transmission ratio. The radial alteration of the position of the endless transmission belt is accompanied by an axial displacement of the endless transmission belt. Generally, the axial displacement of the endless transmission belt in the primary pulley is not equal to that in the secondary pulley because of the geometric construction of the transmission and the fixed length of the endless transmission belt. Consequently, the endless transmission belt will constantly run out of alignment, except with that specific transmission ratio or couple of transmission ratios for which the transmission has been aligned, i.e. for which the centre lines of the V-shaped grooves of the primary and the secondary pulley have been placed in line.

The aforementioned US patent further teaches that the misalignment is undesired from a point of view of load and life of the transmission and of the endless transmission belt. In the specification of this patent it was proposed to limit the maximum occurring misalignment by axially displacing the centre line of the V-shaped groove of the primary pulley relatively to the V-shaped groove of the secondary pulley in the direction of the movable disc of the secondary pulley along a predetermined distance in the 1:1, i.e. Medium transmission ratio, such that alignment of the center lines takes place in a transmission ratio essentially halfway between Medium and the maximum transmission ratio provided by the transmission (i=iₘₐₓ), i.e. the Low transmission ratio.

However, since this known pulley alignment correction has an insufficient effect on the load and the life of both the entire transmission and the separate endless transmission belt, a different pulley alignment correction is proposed in document EP 0 291 129 A1. In this document the distance of the axial displacement of the centre line of the primary pulley is such that that alignment takes place in the so-called "Top" transmission ratio, i.e. the transmission ratio (i) in which during operation the maximum power will be transferred from the primary pulley to the secondary pulley. This is done since it was recognized that during the larger part of the operating life the transmission in operation is in a transmission ratio between Medium transmission ratio (i=1) and a minimum transmission ratio provided by the transmission (i=iₘᵢₙ, i.e. Overdrive transmission ratio, the transmission ratio (i) being defined as the radial distance of the endless transmission belt in the secondary pulley to the drive-shaft relative to the radial distance of the endless transmission belt to the driven shaft in the primary pulley) and that alignment in this range and in particular in the said Top transmission ratio will produce an improved load pattern and a longer life of the transmission and the endless transmission belt.

In the above-mentioned prior transmissions each pulley comprises pulley sheaves having straight sheave surfaces (i.e. the sheave surface extends at a constant acute angle relative to the radial direction). However, recent developments in the field of continuously variable transmissions show the application of curved sheave surfaces, for instance convexly curved sheave surfaces, between which the transmission belt, more specifically a pushbelt, is clamped. Generally, the sheave surfaces are curved in radial direction with a view to minimize or even completely remove the misalignment between the grooves formed between the sheave surfaces of the primary and secondary pulley. When designed properly the curvatures of the sheave surface enable the misalignment to be reduced. However, wear of the transmission belt, especially the transverse elements of the pushbelt type transmission belt, and/or wear of the pulley sheave surfaces was found to be a problem with this latter type of transmission design with curved sheave surfaces and to limit the service life thereof.

EP-A-1441151 discloses the features of the preamble of claim 1.

It is an object of the present invention to further develop the continuously variable transmission with curved sheave surfaces.

It is a further object of the invention to provide an improved continuously variable transmission, that has a longer life and/or is less exposed to wear.

According to a first aspect of the present invention at least one of the above-identified objects of the invention is achieved in a continuously variable transmission, comprising a primary pulley fitted on a drive-shaft and a secondary pulley fitted on a shaft to be driven, each of the pulleys comprising two conical pulley sheaves having radially curved sheave surfaces defining between them a circumference groove in which an endless transmission belt is to be held at a variable radial position, the primary pulley comprising a first sheave fixed to the drive-shaft, and a second sheave axially movable relatively to the drive-shaft, whereby the first and second sheave enclose a groove having a first centre line; the secondary pulley comprising a first sheave fixed to the shaft to be driven and a second sheave axially movable relatively to the shaft to be driven, whereby the two sheaves enclose a groove having a second centre line; wherein the drive shaft and the shaft to be driven are positioned axially parallel at a radial distance and wherein the relative axial position of the first sheave of the first pulley and the first sheave of the second pulley is such that the first centre line and second centre line are misaligned when the transmission is operated with a transmission ratio smaller than the maximum power transmission ratio (Top), wherein the transmission belt is able to transfer a maximum power from the primary pulley to the secondary pulley, the transmission ratio (i) being defined as the radial distance of the endless transmission belt in the secondary pulley to the drive-shaft relative to the radial distance of the endless transmission belt to the driven shaft in the primary pulley.

Whereas the above-identified prior art teaches to avoid misalignment between the centre lines of the primary and secondary pulleys in order to improve the wear resistance and to prolong the life of the transmission belt and the pulleys, according to the present aspect of the invention, the pulleys are intentionally misaligned in the range transmission ratios that are most frequently used during operation of the transmission and/or wherein the belt is maximally loaded, i.e. when the transmission is operated with a transmission ratio smaller than the maximum power transmission ratio (Top) (and larger than the minimum transmission ratio (Overdrive)). The transmission may for instance be aligned in the Medium transmission ratio, i.e. in the position of the endless transmission means where the radial distance of the endless transmission belt in the primary pulley to the (centre line of the) drive-shaft and the radial distance of the endless transmission belt in the secondary pulley to the (centre line of the) shaft to be driven are equal.

The inventor to his surprise found that, under specific circumstances, keeping the primary and secondary pulleys in alignment may result in an increase rather than a decrease of the wear experienced by the transmission belt, more specifically the transverse elements thereof, and/or the wear experienced by the sheaves of the pulleys. The reason for this increase is not quite clear. One possible explanation is that the increased wear may be caused by the fact that the transverse elements of a transmission belt running in an aligned manner arrive in contact with both the contact surface of the movable sheave and the contact surface of the fixed sheave of a pulley simultaneously or at least in ultimately rapid succession. Any slightly displaced or rotated position of one or more transverse elements of the transmission belt, for instance a small axial displacement of a transverse element relative to the centre of the transmission belt and/or a small rotation of a transverse element relative to the radial and/or longitudinal (radial) direction of the transmission belt, is more or less instantaneously, hence forcefully corrected by both contact surfaces of the movable and fixes sheave. It may even occur that such displaced or rotated position of the transverse elements is not corrected completely by the contact, such that when located inside the groove and clamped between the pulley sheaves are still in such misaligned position. This may bring about relatively high (friction) forces, causing an increased level of wear, especially after extended use of the transmission belt.

It is noted here that the increased wear caused in the transmission belt may not be present (or considerably less so) in the conventionally designed transmission belt provided with a constant, typically 11-degree angle of the pulley sheave surfaces and of the pulley contact faces of the transverse elements of the belt and transmission. In these conventional transmission belt line contacts rather than pint contacts are present between the transversal elements and the pulley sheave surfaces. The line contacts between the transversal elements and the pulleys may cause the elements to be automatically aligned, at least relative to the longitudinal direction

Furthermore, it is noted here that the increased wear caused in the transmission belt may also not be present (or considerably less so) in transmission chains. Generally, a transmission chain does not have transversal elements that are of a type that may be axially displaced or rotated relative to other parts of the chain.

Furthermore, the inventor also found that when the transmission belt is operated in a misaligned manner, the wear experienced by the transmission belt and/or the pulleys of the transmission can be considerably reduced. This may be caused by the phenomenon that any such slightly displaced or rotated position of one or more transverse elements of a running transmission belt is initially corrected by the element arriving in contact with only one of the contact surfaces of the sheaves. By this one-sided contact the position of the transverse element will be more gradually corrected before the element makes contact with the opposite contact surface too and thus before it is being clamped firmly between the sheaves of a pulley.

In a preferred embodiment, the transmission is designed such, by the relative axial position of the first sheave of the first pulley and the first sheave of the second pulley incorporated therein, that the said misalignment, i.e. an amount of displacement between the first centre line and second centre line, decreases as the transmission ratio increases from a minimum or Overdrive transmission ratio towards the maximum power transmission ratio (Top). In this embodiment the misalignment at the maximum power transmission (Top) ratio is comparatively small, which on the one hand improves the above-mentioned wear resistance and on the other hand also increases the load resistance of the transmission belt, especially at the transmission ratio(s) at which the transmission belt is loaded to the maximum. In an embodiment, the relative axial position of the first sheave of the first pulley and the first sheave of the second pulley is such that the first centre line and second centre line are misaligned when the transmission is operated with a transmission ratio smaller than the 1:1 transmission ratio (Medium). According to this embodiment there is no alignment of the transmission at those transmission ratios wherein the velocity of the transmission belt and therefore the risk of an elevated level of wear would be relatively large. Consequently, wear of the transmission belt and/or the sheaves may be reduced further.

In an embodiment the relative axial position of the first sheave of the first pulley and the first sheave of the second pulley is such that the first centre line and second centre line are misaligned for all transmission ratios, i.e. for all possible transmission ratios between the minimum transmission ratio or Overdrive, wherein the radial distance radial distance of the endless transmission belt in the primary pulley to the drive-shaft relative is a maximum and the radial distance of the endless transmission belt in the secondary pulley to the driven-shaft is a minimum, and the maximum transmission ratio or Low, wherein the radial distance radial distance of the endless transmission belt in the primary pulley to the drive-shaft relative is a minimum and the radial distance of the endless transmission belt in the secondary pulley to the driven-shaft is maximum. In none of the transmission ratios a perfect alignment occurs. Even at the maximum transmission ratio (Low) the transmission remains misaligned. Consequently, in this embodiment the reduction of wear induced by the displacement and/or rotation of the transverse elements of the transmission belt can be achieved for transmission ratios ranging from the minimum transmission ratio (Overdrive) to the maximum transmission ratio (Low).

In an embodiment, the relative axial displacement of the centre lines of the groove of the pulleys exceeds a threshold value when the transmission is misaligned in accordance with any one of the embodiments described herein.

In a further embodiment the threshold value is about 0.05 mm, or, in a still further embodiment, about 0.1 mm. If the misalignment is below this threshold value, the displaced or rotated position of the transverse elements of the transmission belt may not be corrected sufficiently and therefore the level of wear may remain rather large. If, however, the misalignment exceeds the threshold, there is a clear (further) reduction of the level of wear since the displaced or rotated position of the transverse elements may be better corrected..

In an embodiment, the relative axial displacement of the centre lines of the circumferential groove of the pulleys is equal to or smaller than 0.75 mm when the transmission is misaligned in accordance with any one of the embodiments described herein. At least at the said maximum power transmission ratio (Top) this latter relative axial displacement is preferably equal to or smaller than about 0.40 mm.

In embodiments of the present invention the transmission belt is a pushbelt type transmission belt that comprises transverse elements which are held such that they can move along a tensioning element of the drive belt and which, at least when the transmission is operating, at the location of lateral sides thereof are alternately clamped between the pulley sheaves of the primary pulley and of the secondary pulley.

Further advantages, characteristics and details of the present invention will become apparent from the following description of preferred embodiments thereof. In the description reference is made to the annexed drawings, that show:
FIG. 1 is a diagrammatic view of an continuously variable transmission according to the invention, in the medium position with alignment correction C;
FIG. 2A is a front view of an embodiment of a transverse element according to the known art;
FIG 2B is a side view of two consecutive transverse elements in accordance with FIG. 2A;
FIG. 3 diagrammatically illustrates the trend of the alignment error (S) of a transmission as function of the transmission ratio (i), the transmission being aligned according to a first embodiment;
FIG. 4 diagrammatically illustrates the trend of the alignment error (S) of a transmission as function of the transmission ratio (i), the transmission being aligned according to a second embodiment;
FIG. 5 diagrammatically illustrates the trend of the alignment error (S) of a transmission as function of the transmission ratio (i), the transmission being aligned according to a third embodiment;
FIG. 6 diagrammatically illustrates the trend of the alignment error (S) of a transmission as function of the transmission ratio (i), the transmission being aligned according to a fourth embodiment; and
FIG. 7 diagrammatically illustrates the trend of the alignment error (S) of a transmission as function of the transmission ratio (i), the transmission being aligned according to a fifth embodiment.

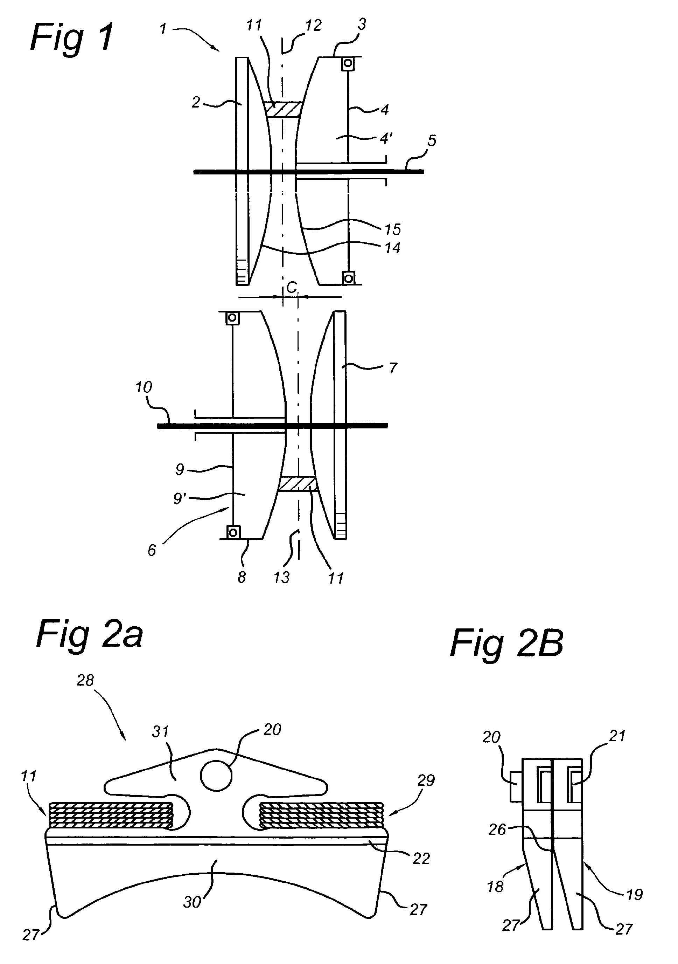

The continuously variable transmission according to FIG. 1 comprises a primary pulley 1 which is fitted on a drive-shaft 5, for instance the drive shaft of a car or other type of motor vehicle. The primary pulley 1 comprise of a first conical disc or sheave 2 fixed to the shaft 5 and a second conical disc or sheave 3 axially movable on the shaft 5. The axially movable disc 3, together with a plate 4 fixed to the shaft 5, form a cylinder-piston combination having a closed cylinder chamber 4'. The transmission 1 also comprises a secondary pulley 6 associated with a shaft 10 to be driven. The secondary pulley 6 comprises a conical disc or sheave 7 fixed to the shaft 10 and a conical disc or sheave 8 fitted axially movable on the shaft 10. The disc 8, together with a plate 9 fixed to the shaft 10, form a cylinder-piston combination having a closed cylinder chamber 9'.

The conical sheave angled surfaces 14-17 of the respective sheaves 2-5 are curved in cross section, more specifically are convexly shaped in radial direction. Furthermore, shafts 5 and 10 are provided axially parallel at a predetermined radial distance. The conical discs of the primary pulley 1 and the secondary pulley 6 respectively enclose grooves in which an endless transmission belt 11 is provided. The endless transmission belt 11 may be a conventional pushbelt. An example of a conventional pushbelt is shown in figure 2. The push type transmission belt comprises transverse elements 28 and an endless carrier 29, the transverse elements being arranged freely slideable along said carrier and comprising a tapered radially inner element part 30, a radially angled element part 31 having a front principle face 18 with a notch-like protrusion 20 provided thereon and having a back principle face 19 with a hole-like recess 21 provided therein, and a rocking edge 22 forming a transition between the said principle faces 18 and 19, such that adjacent transverse elements may mutually rotate about a contract line 26 on the rocking edge 22. The notch-like protrusion 20 extending from the front principle face 18 may interact with the hole-like recess 21 so as to mutually align and/or position two adjacent transverse elements 28. The transverse elements 28 are further provided with lateral side faces 27 that during operation may be clamped between and arrive in friction contact with the sheaves 14-17 of the primary pulley and of the secondary pulley respectively.

The transmission ratio of the continuously variable transmission is dependent on the ratio between the radial position of the endless transmission belt 11 in the groove of the secondary pulley 6 and the groove of the primary pulley 1. More specifically, the transmission ratio is defined here as the distance (R₂) between de belt and a centre line of the shaft 10 of the second pulley 6 divided by the distance (R₁) between the belt and a centre line of the shaft 5 of the first pulley.

The transmission ratio of the transmission can be altered by increasing the width of the groove of one of the pulleys and decreasing the width of the other one. The endless transmission belt 11 will then move in the grooves in radial directions, as a result of which the transmission ratio is altered. Widening and narrowing the grooves is usually effected by reducing or increasing a control pressure of a hydraulic medium in the cylinder chamber 4', whilst in the cylinder chamber 9' respectively a higher or lower tension pressure is applied by means of a hydraulic medium. The pressure ensures that sufficient tensile force is constantly exerted on the endless transmission belt 11.

As mentioned above, the specific geometric construction of the transmission, more specifically the shape of the sheaves of the pulleys, brings about an axial displacement when the endless transmission belt 11 is displaced in a radial direction. Generally, the axial displacements of the endless transmission belt in the primary pulley 1 and in the secondary pulley 6 differ so that the endless transmission belt constantly runs out of alignment, except in those transmission ratios for which the transmission has been aligned, i.e. the transmission ratios in which the centre line 12 of the groove of the primary pulley 1 is in line with the centre line 13 of the groove of the secondary pulley 6.

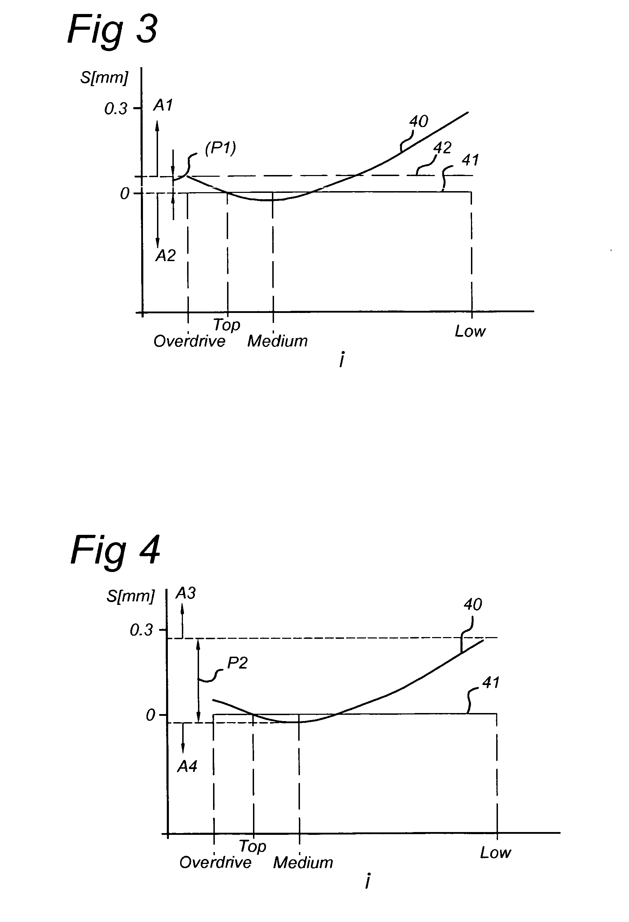

An example of a curve 40 representative of the misalignment S as function of the transmission ratio (i) in a first embodiment of the present invention is illustrated in figure 3. Figure 3 shows that the transmission ratio (i) may range from a minimum transmission ratio or overdrive rate, through a TOP transmission ratio wherein the power transferred by the transmission is maximum, a medium transmission ratio wherein the radial distance between the belt 11 and the centre line of the shaft 5 is equal to the radial distance between the belt 11 and the centre line of the shaft 10, to a maximum transmission ratio, also referred to as the LOW. Line 41 is an alignment line and represents the situation wherein the primary and secondary pulley are perfectly aligned (i.e. the misalignment S is zero). Figure shows that in this specific example the transmission is configured to be in alignment at the TOP transmission ratio since the alignment line 41 crosses curve 40 at the TOP transmission ratio.

It has been recognized that during the larger part of the operating time the transmission in operation is in a transmission ratio between the medium (i=1) and the overdrive position, generally corresponding with the third, fourth and fifth gear of a manual transmission. Therefore and in view of the above-discussed reduced wear of the transmission belt and/or the pulley sheaves when the transmission is out of alignment, in the embodiment of figure 3, the transmission is configured to be be misaligned in the transmission ratio range between the Overdrive transmission ratio and the Top transmission ratio. In other words, alignment may take place at any transmission ratio except at transmission ratios between the Overdrive ratio and Top ratio. This is indicated in figure 3 by the terms "prohibited region" (P) and "allowable region" (A). In the present embodiment two allowable regions (A₁, A₂) exists, one region at or below alignment line 41 and one region above alignment line 42. The transmission may for instance be aligned in the TOP transmission ratio , as is indicted in figure 3, or at a higher transmission ratio, for instance at the medium transmission ratio, as long as there is no alignment in the prohibited region (P) of the transmission ratio or, in other words, the alignment line 41 may be displaced upward or downward as long as it does not cross curve 40 in the prohibited region (P). In order to obtain the required (mis)alignment one may, when mounting the pulleys 1,6 on the shafts 5,10 and starting for instance from a medium position, move the first centre line 12 of the groove of the primary pulley 1 axially relative to the centre line 13 of the groove of the secondary pulley 6, as long as the line of perfect alignment remains in either of the allowed regions (A₁,A₂).

In figure 4 the alignment error (S) in accordance with another embodiment is shown. In this embodiment the first centre line 12 and second centre line 13 are misaligned for any of the possible transmission ratios between the minimum transmission ratio (Overdrive) and the maximum transmission ratio (Low). Figure 4 shows the prohibited region P₂ and two allowed regions A₃ and A₄. Consequently, in this embodiment the reduction of wear induced by the displacement and/or rotation of the transverse elements of the transmission belt can be achieved for all transmission ratios, thereby even further extending the service life of the transmission.

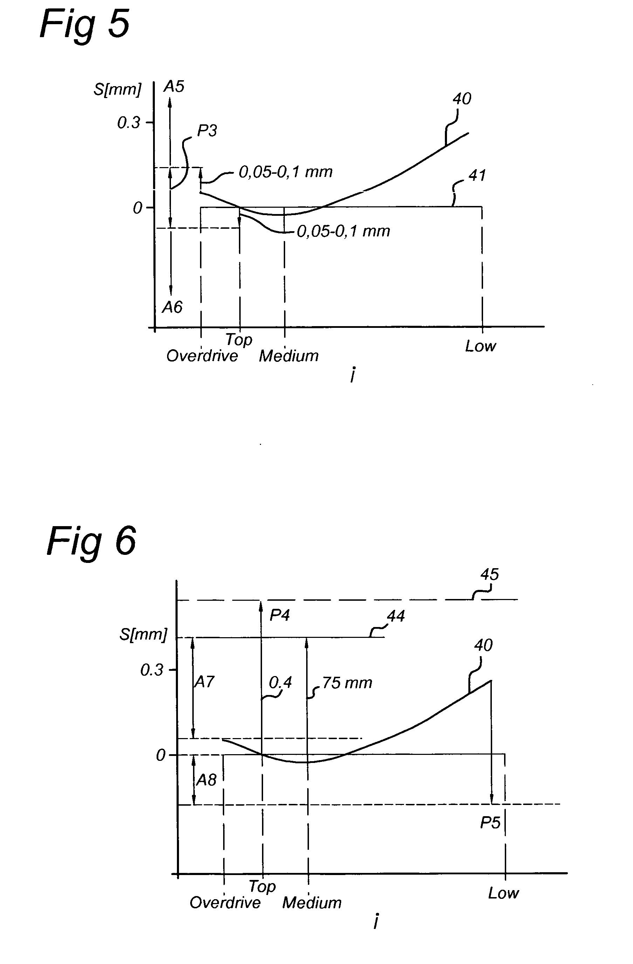

In figure 5 the alignment error (S) in accordance with another embodiment is shown. In this embodiment the first centre line 12 and second centre line 13 are misaligned so that the alignment error (S) in the region between the Overdrive transmission ratio and the Top transmission ratio is larger than a predefined threshold value, for instance 0.05 mm or 0.1 mm. Comparing figures 3 and 5 reveals that the prohibited region P₃ of figure 5 is larger than region P in figure 3.

In figure 6 the alignment error (S) in accordance with other embodiments is shown. In an embodiment the first centre line 12 and second centre line 13 are misaligned so that the alignment error (S) in any of the transmission ratios in the range between the minimum and maximum ratios is smaller than a threshold value, for instance smaller than about 0,75 mm. Figure 6 shows the resulting prohibited regions P₄,P₅. If, in another embodiment, additionally no alignment may take place in the region P (cf. figure 3) between the Overdrive transmission ratio and the Top transmission ratio, only 2 (instead of one) allowable regions A₇ and A₈ exist.

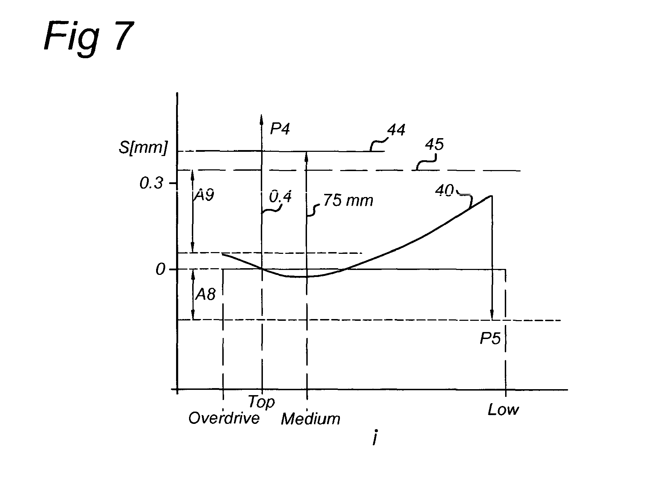

In figures 6 and 7 also the alignment error (S) in accordance with another embodiment is shown. Starting from the embodiment shown in figure 6, a further requirement may be that the misalignment at the maximum power (Top) transmission ratio the misalignment should be smaller than a further threshold value, for instance smaller than 0.4 as is indicated with dotted line 45. In case line 45 is situated above line 44 delimiting the prohibited region P₄, the allowed region remains the same, i.e. A₇. This situation is shown in figure 6. In case line 45 is below line 44 as is indicated in figure 7, the allowed region is restricted to A₉.

Although the invention has been described with reference to specific embodiments thereof, it will be appreciated that invention is not limited to these embodiments and that changes and modifications to the system and method described herein may be made without departing from the invention. The rights applied for are defined by the following claims.

## Claims

1. Continuously variable transmission, comprising:
a primary pulley (1) fitted on a drive-shaft (5) and a secondary pulley (6) fitted on a shaft (10) to be driven, each of the pulleys comprising two conical pulley sheaves (2,3;7,8) having radially curved sheave surfaces (14-17) defining between them a circumferential groove in which an endless transmission belt (11) is to be held at a variable radial position;
the primary pulley (1) comprising a first sheave fixed (2) to the drive-shaft, and a second sheave (3) axially movable relatively to the drive-shaft, whereby the first and second sheave enclose a groove having a first centre line (12);
the secondary pulley (6) comprising a first sheave (7) fixed to the shaft to be driven and a second sheave (8) axially movable relatively to the shaft to be driven, whereby the two sheaves enclose a curved groove having a second centre line (13);
wherein the drive shaft (5) and the shaft (10) to be driven are positioned axially parallel at a radial distance, **characterized in that**
the relative axial position of the first sheave of the first pulley (1) and the first sheave of the second pulley (6) is such that the first centre line and second centre line are misaligned when the transmission is operated with a transmission ratio smaller than the maximum power transmission ratio (Top) wherein the transmission belt (11) is able to transfer a maximum power from the primary pulley (1) to the secondary pulley (6), the transmission ratio (i) being defined as the radial distance of the endless transmission belt (11) in the secondary pulley to the drive-shaft relative to the radial distance of the endless transmission belt to the driven shaft in the primary pulley.

2. Transmission as claimed in claim 1, wherein the relative axial position of the first sheave (2) of the first pulley (1) and the first sheave (7) of the second pulley (6) is such that the first centre line and second centre line are misaligned for all transmission ratios.

3. Transmission as claimed in claim 1 or 2, wherein the relative axial position of the first sheave (2) of the first pulley and the first sheave (7) of the second pulley is such that the misalignment decreases as the transmission ratio increases from a minimum towards the maximum power transmission ratio (Top).

4. Transmission as claimed in any of the preceding claims, wherein the relative axial displacement of the centre lines of the circumferential groove of the first and second pulley exceeds a threshold when the transmission is misaligned in accordance with any of claims 1-3.

5. Transmission as claimed in any of the preceding claims, wherein the relative axial position of the first sheave of the first pulley and the first sheave of the second pulley is such that the first centre line and second centre line are misaligned for more than a threshold value when operated in the range of the transmission ratios between the overdrive transmission ratio value and the maximum power transmission ratio value (TOP).

6. Transmission as claimed in claim 4 or 5, wherein the threshold value is about 0.05 mm, preferably about 0.1 mm.

7. Transmission as claimed in any of the preceding claims, wherein the relative axial displacement of the centre lines (12,13) of the circumferential groove of the first and second pulley is equal to or smaller than about 0.75 mm when the transmission is misaligned in accordance with any claims 1-6.

8. Transmission as claimed in claim 7, wherein at least at the said maximum power transmission ratio (Top) the relative axial displacement is equal to or smaller than about 0.40 mm.

9. Transmission as claimed in any of the preceding claims, wherein the axial positioning of the fixed and the movable sheave on the drive shaft is opposed to that on the shaft to be driven.

10. Transmission as claimed in any of the preceding claims, wherein the endless transmission belt (11) comprises transverse elements (28) which are held such that they can move along a tensioning element of the drive belt and which, at least when the transmission is operating, at the location of lateral sides thereof are alternately clamped between the pulley sheaves of the primary pulley (1) and of the secondary pulley (6).

## Patentansprüche

1. Stufenloses veränderbare Getriebe, umfassend:
eine erste Riemenscheibe (1), die auf einer Antriebswelle (5) angebracht ist, und eine zweite Riemenscheibe (6), die auf einer anzutreibenden Welle (10) angebracht ist, wobei jede der Riemenscheiben zwei konische Riemenscheiben-Rollen (2, 3; 7, 8) enthält, die radial gewölbte Rollenflächen (14-17) haben, die zwischen sich eine Umfangsrille definieren, in der ein Endlos-Getrieberiemen (11) in einer veränderbaren Radialposition gehalten werden soll;
wobei die erste Riemenscheibe (1) eine erste Rolle (2), die an der Antriebswelle befestigt ist, und eine zweite Rolle (3) enthält, die relativ zu der Antriebswelle axial beweglich ist, wobei die erste und die zweite Rolle eine Rille einschließen, die eine erste Mittellinie (12) hat;
die zweite Riemenscheibe (6) eine erste Rolle (7), die an der anzutreibenden Welle befestigt ist, und eine zweite Rolle (8) enthält, die relativ zu der anzutreibenden Welle axial beweglich ist, wobei die beiden Rollen eine gewölbte Rille einschließen, die eine zweite Mittellinie (13) hat; und
die Antriebswelle (5) sowie die anzutreibende Welle (10) in einem radialen Abstand axial parallel zueinander angeordnet sind, **dadurch gekennzeichnet, dass**
die relative Achsposition der ersten Rolle der ersten Riemenscheibe (1) und der ersten Rolle der zweiten Riemenscheibe (6) derart beschaffen ist, dass die erste Mittellinie und die zweite Mittellinie nicht in Ausrichtung sind, wenn das Getriebe mit einem Übersetzungsverhältnis betrieben wird, das kleiner ist als das Maximalleistungs-Übersetzungsverhältnis (Top), wobei der Getrieberiemen (11) in der Lage ist, eine maximale Leistung von der ersten Riemenscheibe (1) auf die zweite Riemenscheibe (6) zu übertragen, und das Übersetzungsverhältnis (i) als der Radialabstand des Endlos-Getieberiemens (11) in der zweiten Riemenscheibe zu der Antriebswelle relativ zu dem Radialabstand des Endlos-Getrieberiemens zu der angetriebenen Welle in der ersten Riemenscheibe definiert ist.

2. Getriebe nach Anspruch 1, bei dem die relative Achsposition der ersten Rolle (2) der ersten Riemenscheibe (1) und der ersten Rolle (7) der zweiten Riemenscheibe (6) derart beschaffen ist, dass die erste Mittellinie und die zweite Mittellinie für alle Übersetzungsverhältnisse nicht ausgerichtet sind.

3. Getriebe nach Anspruch 1 oder 2, bei dem die relative Achsposition der ersten Rolle (2) der ersten Riemenscheibe und der ersten Rolle (7) der zweiten Riemenscheibe derart beschaffen ist, das die Nichtausrichtung abnimmt, wenn das Übersetzungsverhältnis von einem Minimum zu dem Maximalleistungs-Übersetzungsverhältnis (Top) zunimmt.

4. Getriebe nach einem der vorhergehenden Ansprüche, bei dem die relative Achsverschiebung der Mittellinien der Umfangsrille der ersten und der zweiten Riemenscheibe einen Schwellenwert überschreitet, wenn das Getriebe gemäß einem der Ansprüche 1 bis 3 nicht ausgerichtet ist.

5. Getriebe nach einem der vorhergehenden Ansprüche, bei dem die relative Achsposition der ersten Rolle der ersten Riemenscheibe und der ersten Rolle der zweiten Riemenscheibe derart beschaffen ist, dass die erste Mittellinie und die zweite Mittellinie um mehr als den Schwellenwert nicht ausgerichtet sind, wenn es in dem Bereich der Übersetzungsverhältnisse zwischen dem Schnellgang-Übersetzungsverhältniswert und dem Maximalleistungs-Übersetzungsverhältniswert (Top) betrieben wird.

6. Getriebe nach Anspruch 4 oder 5, bei dem der Schwellenwert etwa 0,05 mm, vorzugsweise jedoch etwa 0,1 mm beträgt.

7. Getriebe nach einem der vorhergehenden Ansprüche, bei dem die relative axiale Verschiebung der Mittellinien (12, 13) der Umfangsrille der ersten und der zweiten Riemenscheibe kleiner oder gleich etwa 0,75 mm ist, wenn das Getriebe gemäß einem der Ansprüche 1 bis 6 nicht ausgerichtet ist.

8. Getriebe nach Anspruch 7, bei dem wenigstens bei dem Maximalleistungs-Übersetzungsverhältnis (Top) die relative axiale Verschiebung kleiner oder gleich etwa 0,40 mm ist.

9. Getriebe nach einem der vorhergehenden Ansprüche, bei dem die axiale Positionierung der feststehenden und der beweglichen Rolle auf der Antriebswelle jenem auf der anzutreibenden Welle entgegengesetzt ist.

10. Getriebe nach einem der vorhergehenden Ansprüche, bei dem der Endlos-Getrieberiemen (11) querverlaufende Elemente (28) aufweist, die derart gehalten sind, dass sie sich entlang eines Spannelementes des Antriebsriemens bewegen können, und die, wenigstens wenn das Getriebe in Betrieb ist, an der Stelle von Seitenflächen derselben alternierend zwischen den Riemenscheiben-Rollen der ersten Riemenscheibe (1) und der zweiten Riemenscheibe (6) festgeklemmt werden.

## Revendications

1. Transmission à variation continue, comprenant :
une poulie primaire (1) montée sur un arbre d'entraînement (5) et une poulie secondaire (6) montée sur un arbre (10) à entraîner, chacune des poulies comprenant deux roues à disque coniques (2, 3 ; 7, 8) ayant des surfaces de roue à disque incurvées radialement (14-17) définissant entre elles une gorge circonférentielle dans laquelle une courroie de transmission sans fin (11) doit être maintenue à une position radiale variable ;
la poulie primaire (1) comprenant une première roue à disque (2) fixée sur l'arbre d'entraînement, et une deuxième roue à disque (3) mobile axialement par rapport à l'arbre d'entraînement, de telle manière que les première et deuxième roues à disque renferment une gorge ayant une première ligne médiane (12) ;
la poulie secondaire (6) comprenant une première roue à disque (7) fixée sur l'arbre à entraîner et une deuxième roue à disque (8) mobile axialement par rapport à l'arbre à entraîner, de telle manière que les deux roues à disque renferment une gorge incurvée ayant une deuxième ligne médiane (13) ;
dans laquelle l'arbre d'entraînement (5) et l'arbre (10) à entraîner sont positionnés parallèles axialement à une distance radiale,
**caractérisée en ce que**
la position axiale relative de la première roue à disque de la première poulie (1) et de la première roue à disque de la deuxième poulie (6) est telle que la première ligne médiane et la deuxième ligne médiane sont désalignées lorsque la transmission est en fonctionnement avec un rapport de transmission inférieur au rapport de transmission de puissance maximale (Top) auquel la courroie de transmission (11) est apte à transférer une puissance maximale de la poulie primaire (1) à la poulie secondaire (6),
le rapport de transmission (i) étant défini comme étant le rapport de la distance radiale de la courroie de transmission sans fin (11) dans la poulie secondaire à l'arbre d'entraînement sur la distance radiale de la courroie de transmission sans fin à l'arbre entraîné dans la poulie primaire.

2. Transmission selon la revendication 1, dans laquelle la position axiale relative de la première roue à disque (2) de la première poulie (1) et de la première roue à disque (7) de la deuxième poulie (6) est telle que la première ligne médiane et la deuxième ligne médiane sont désalignées pour tous les rapports de transmission.

3. Transmission selon la revendication 1 ou 2, dans laquelle la position axiale relative de la première roue à disque (2) de la première poulie et de la première roue à disque (7) de la deuxième poulie est telle que le désalignement diminue au fur et à mesure que le rapport de transmission augmente d'un minimum au rapport de transmission de puissance maximale (Top).

4. Transmission selon l'une quelconque des revendications précédentes, dans laquelle le déplacement axial relatif des lignes médianes de la gorge circonférentielle des première et deuxième poulies est supérieur à un seuil lorsque la transmission est désalignée selon l'une quelconque des revendications 1 à 3.

5. Transmission selon l'une quelconque des revendications précédentes, dans laquelle la position axiale relative de la première roue à disque de la première poulie et de la première roue à disque de la deuxième poulie est telle que la première ligne médiane et la deuxième ligne médiane sont désalignées de plus d'une valeur de seuil en fonctionnement dans la plage des rapports de transmission entre la valeur de rapport de transmission de vitesse surmultipliée et la valeur de rapport de transmission de puissance maximale (TOP).

6. Transmission selon la revendication 4 ou 5, dans laquelle la valeur de seuil est d'environ 0,05 mm, de préférence d'environ 0,1 mm.

7. Transmission selon l'une quelconque des revendications précédentes, dans laquelle le déplacement axial relatif des lignes médianes (12, 13) de la gorge circonférentielle des première et deuxième poulies est inférieur ou égal à environ 0,75 mm lorsque la transmission est désalignée selon l'une quelconque des revendications 1 à 6.

8. Transmission selon la revendication 7, dans laquelle au moins au dit rapport de transmission de puissance maximale (Top) le déplacement axial relatif est inférieur ou égal à environ 0,40 mm.

9. Transmission selon l'une quelconque des revendications précédentes, dans laquelle le positionnement axial de la roue à disque fixe et de la roue à disque mobile sur l'arbre d'entraînement est opposé à celui sur l'arbre à entraîner.

10. Transmission selon l'une quelconque des revendications précédentes, dans laquelle la courroie de transmission sans fin (11) comprend des éléments transversaux (28) qui sont maintenus de manière à pouvoir se déplacer le long d'un élément de tension de la courroie d'entraînement et qui, au moins lorsque la transmission est en fonctionnement, à l'emplacement des côtés latéraux de celui-ci, sont alternativement serrés entre les roues à disque de la poulie primaire (1) et de la poulie secondaire (6).
